# EUROPÄISCHE PATENTSCHRIFT

(11) **EP 1 212 742 B1**
(45) Veröffentlichungstag und Bekanntmachung des Hinweises auf die Patenterteilung: **04.04.2007**
(21) Anmeldenummer: 00964117.6
(22) Anmeldetag: 06.09.2000
(51) Int. Cl.: G08G 1/0969, G01C 21/36, G09B 29/00, G09B 29/10

(54) **NAVIGATIONSVORRICHTUNG**
NAVIGATION DEVICE
DISPOSITIF DE NAVIGATION

(30) Priorität: 15.09.1999 DE 19944080; 15.09.1999 DE 19944081; 08.10.1999 DE 19948561; 08.10.1999 DE 19948562
(43) Veröffentlichungstag der Anmeldung: 12.06.2002
(60) Teilanmeldung: 04030090.7
(73) Patentinhaber: AUDI AG, 85045 Ingolstadt (DE)
(72) Erfinder: HAMBERGER, Werner, 85101 Lenting (DE); REMLINGER, Wolfram, 85049 Ingolstadt (DE); SCHRÖDER, Jürgen, 85139 Wettstetten (DE)
(74) Vertreter: Thielmann, Frank
(86) Internationale Anmeldenummer: PCT/EP2000/008676
(87) Internationale Veröffentlichungsnummer: WO 2001/020580

(56) Entgegenhaltungen:
- EP-A- 0 961 198
- US-A- 4 504 913
- US-A- 4 608 656
- US-A- 4 935 728

## Beschreibung

Die Erfindung betrifft eine Navigationsvorrichtung, insbesondere zum Einbau in ein Kraftfahrzeug, gemäß dem Oberbegriff des Patentanspruchs 1.

Gattungsgemäße Navigationsvorrichtungen mit einem Monitor, auf dem eine Landkarte angezeigt werden kann, sind insbesondere für den Gebrauch in Kraftfahrzeugen allgemein bekannt. Aus dem Stand der Technik sind Navigationsvorrichtungen bekannt, bei denen ein Cursor auf der Landkarte mittels eines Joysticks bewegt werden kann. Es ist jedoch aufgrund des in einem Fahrzeug vorhandenen, limitierten Platzes unerwünscht, zum Zwecke der Cursorsteuerung ein zusätzliches Bauteil, in diesem Falle einen Joystick, vorzusehen, das für andere Zwecke entweder gar nicht oder zumindest nur in sehr beschränktem Umfang eingesetzt werden kann.

Bei einer anderen aus dem Stand der Technik bekannten Navigationsvorrichtung kann der Cursor mittels einer Kreuzwippe gesteuert werden. Auch hier wird ein zusätzliches Bauteil benötigt, weshalb auch diese Lösung unbefriedigend ist. Diese Variante hat weiterhin den Nachteil, dass der Cursor nur entlang von acht Richtungen bewegt werden kann. So gestaltet es sich als umständlich, den Cursor entlang beliebiger Richtungen zu bewegen.

Das Gleiche gilt für eine weitere aus dem Stand der Technik bekannte Navigationsvorrichtung, bei der mit einem Drehschalter zunächst die eine Koordinate des Cursors auf die Sollkoordinate gebracht wird, dann, nach einem durch Drücken des Drehschalters ausgelösten Umschaltvorgang, die andere senkrecht zur ersten verlaufende.

Aus der US 4 608 656 ist eine Straßenkartenanzeige für ein Auto bekannt, wobei im Zentrum der Anzeige eine Art Cursor dargestellt ist, der die Position des Autos auf der Straßenkarte wiederspiegelt und die Fahrtrichtung anzeigt. Während der Fahrt mit dem Auto wird die Karte automatisch so bewegt, dass sich der Cursor immer im Zentrum der Karte befindet. Außerdem wird die Karte entsprechend der Fahrtrichtung gedreht. Für die Eingabe der Anfangsposition des Fahrzeugs ist ein Joystickpaar vorgesehen. Außerdem ist eine sogenannte Maßstabsauswahleinheit vorgesehen, mit der der Maßstab der Straßenkarte ausgewählt werden kann. Der Mittelpunkt bleibt vorzugsweise bei dieser Maßstabswahl erhalten. Als Bedienelemente werden eine Tastatur und das erwähnte Joystickpaar verwendet.

In diesem Zusammenhang sei ferner auf die EP 0 961 198 A2 verwiesen, deren Inhalt zum Stand der Technik nach Artikel 54 (3) und (4) EPÜ zählt und für die die Vertragsstaaten DE, ES, FR und GB benannt wurden. Aus diesem Dokument ist ein elektronisches Gerät mit einem Drehschalter und einem Anzeigebildschirm zur Anzeige von Informationen bekannt. Der Bildschirm kann entweder ein Menü zur Auswahl von Funktionen anzeigen, wobei mit Hilfe des Drehschalters ein Cursor auf dem Bildschirm bewegt wird. Der Bildschirm kann außerdem auch einen Kartenausschnitt zeigen, der mit Hilfe des Drehschalters bewegt werden kann. Dabei erfolgt zuerst die Auswahl der Bewegungsrichtung bei Stillstand des Cursors oder des Kartenausschnitts durch Drehen des Drehschalters. Die Bewegung des Cursors oder des Kartenausschnitts erfolgt dann durch eine Axialbewegung des Drehschalters.

Vor diesem Hintergrund liegt der Erfindung die Aufgabe zugrunde, eine gattungsgemäße Navigationsvorrichtung derart weiterzubilden, dass sie die Steuerung eines Cursors auf einfache und bedienungsfreundliche Art und Weise ermöglicht, wobei der Platzbedarf für die Steuerungsvorrichtung möglichst klein gehalten werden soll.

Diese Aufgabe wird gelöst durch eine Navigationsvorrichtung gemäß den Merkmalen des Patentanspruchs 1. Die Unteransprüche betreffen besonders zweckmäßige Weiterbildungen der Erfindung.

Die Erfindung geht davon aus, dass sich die Cursorsteuerung in zwei Einzelaspekte zerlegen lässt : zum einen die Wahl einer Bewegungsrichtung des Cursors, zum anderen das Auslösen oder das Durchführen einer Bewegung des Cursors. Erfindungsgemäß wird daher eine Navigationsvorrichtung bereitgestellt, die einen Drehschalter umfasst, wobei in einem ersten Bedienmodus des Drehschalters durch Drehung des Drehschalters unabhängig von einer Bewegung des Cursors eine Bewegungsrichtung des Cursors auf der Abbildung wählbar ist. Dadurch ergibt sich für den Benutzer das Gefühl, er würde den Cursor, vorzugsweise als Pfeil dargestellt, mit der Hand drehen. Auf diese Art und Weise kann die Bewegungsrichtung des Cursors - nicht nur bei dessen Stillstand sondern auch während er sich bewegt - außerdem überaus flexibel eingestellt werden, und der Benutzer ist nicht wie in anderen Vorrichtungen an eine Bewegung in nur acht verschiedenen Richtungen, wie z. B. rechts, links, oben und unten gebunden. Die Verwendung eines Drehschalters ist deshalb besonders vorteilhaft, da ein solcher, im Vergleich zu einer Kreuzwippe oder einem Joystick, ohnehin in nahezu jedem Kraftfahrzeug vorhanden ist. Durch Benutzung eines bereits vorhandenen Drehschalters, beispielsweise in einer anderen axialen Stellung, kann die Funktion der Cursorsteuerung ohne zusätzliches Bauelement, d.h. ohne zusätzlichen Platzbedarf und bei minimalen Zusatzkosten realisiert werden.

Durch Drehung des Drehschalters kann in einem weiteren Bedienmodus der Maßstab der Abbildung wählbar sein. Indem der Drehschalter, beispielsweise in anderen axialen Stellungen, noch für andere Bedienfunktionen der Navigationsvorrichtung verwendbar ist, wird der Bedienkomfort der Navigationsvorrichtung weiter gesteigert.

Eine vorteilhafte Weiterbildung der Erfindung sieht vor, dass der Mittelpunkt der Abbildung bei der Maßstabswahl erhalten bleibt, da der Benutzer den auf dem Monitor sichtbaren Abbildungsausschnitt instinktiv so wählen wird, dass der ihn interessierende Bereich der Abbildung nahezu in der Mitte liegt.

Bei einer Weiterbildung der Erfindung kann durch Betätigung des Drehschalters, beispielsweise durch Drehung des Drehschalters oder axiale Krafteinwirkung auf den Drehschalter, in einem weiteren Bedienmodus die Bewegung eines Cursors entlang oder entgegen einer ausgewählten Richtung ausführbar oder auslösbar sein, wodurch die Bedienung der Navigationsvorrichtung weiter vereinfacht wird, da der Benutzer seine Hand oder seine Finger auch für die Bewegung des Cursors nicht neu positionieren muss. Weist der Drehschalter mehrere Bedienmodi auf ist diese Funktion vorzugsweise mit den Extremstellungen des Drehschalters, d.h. ganz eingedrückt oder ganz herausgezogen, verknüpft. Die Auslösung oder Ausführung einer Bewegung des Cursors kann hierbei vor oder nach dem Einstellen einer Bewegungsrichtung des Cursors erfolgen. Bei Auslösung einer Bewegung vor dem Einstellen einer Bewegungsrichtung kommen als Defaultrichtung vorzugsweise in Frage die zuletzt eingestellte Bewegungsrichtung, die Bewegung entlang einer zuvor eingestellten Route oder in Richtung eines zuvor eingegebenen Ziels. Die Anfangsrichtung des Cursors kann dann während der Bewegung des Cursors durch Drehung des Drehschalters in die gewünschte Richtung geändert werden.

Wird die Bewegung des Cursors durch axiale Krafteinwirkung auf den Drehschalter, zum Beispiel über eine vorbestimmte Zeit, ausgelöst, ergibt sich der Vorteil, dass besonders bei einer längeren Bewegung des Cursors in eine Richtung nicht wie bei längerem Drehen des Drehschalters in eine Richtung immer wieder nachgegriffen werden muss, sondern, dass die Hand oder die Finger während der Cursorbewegung in gleicher Weise an dem Drehschalter positioniert bleiben können.

Es kann weiterhin vorgesehen werden, dass durch Drehung des Drehschalters in einem weiteren Bedienmodus eine Funktion wählbar ist. Durch eine solche Ausführungsform wird die Anbringung zahlreicher Funktionstasten überflüssig und die Bedieneinheit der erfindungsgemäßen Navigationsvorrichtung bleibt übersichtlich. Durch die Funktion kann der Bedienmodus und/oder mindestens einer der weiteren Bedienmodi einstellbar sein. Der Bedienmodus könnte folglich auch durch Drehung des Drehschalters gewählt werden, wodurch eine sehr große Anzahl von verschiedenen Bedienmodi wählbar ist, so dass mit dem Drehschalter alle für die Benutzung der Navigationsvorrichtung notwendigen Bedienschritte durchgeführt werden können.

Einer weiteren Ausführungsform der Erfindung sieht vor, dass der Bedienmodus und/oder mindestens einer der weiteren Bedienmodi durch die Betätigung mindestens eines weiteren Dreh-, Druck- und/oder Schiebeschalters einstellbar ist.

Diese Ausführung ist insbesondere dann von großem Vorteil, wenn der Bedienmodus sehr häufig gewechselt werden muss.

Bei einer vorteilhaften Weiterbildung der Erfindung ist der Bedienmodus und/oder mindestens einer der weiteren Bedienmodi durch mindestens eine axiale Krafteinwirkung über eine vorbestimmte Zeit auf den Drehschalter, vorzugsweise gegen eine Federkraft, einstellbar. Diese Weiterbildung ist besonders leicht zu bedienen, wenn nur wenige Bedienmodi genutzt werden.

Im folgenden wird eine Ausführungsform der Erfindung anhand von Zeichnungen beschrieben.

Es zeigt
- Figur 1:: eine schematische Darstellung eines Drehschalters der erfindungsgemäßen Navigationsvorrichtung in einer Aufsicht;
- Figur 2:: eine schematische Darstellung des Drehschalters gemäß Figur 1 in einer Seitenansicht; und
- Figur 3:: eine schematische Darstellung eines Monitors der erfindungsgemäßen Navigationsvorrichtung.

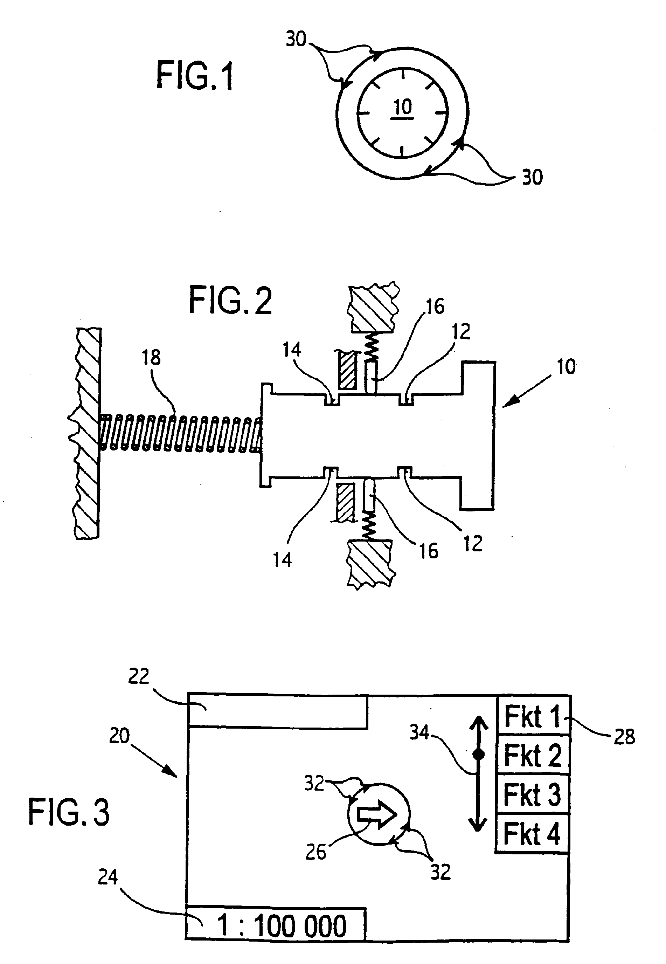

In einer für den Benutzer ergonomisch günstigen Lage ist in einem Kraftfahrzeug ein Drehschalter 10 angebracht, der in den Figuren 1 und 2 dargestellt ist. Dieser Drehschalter 10 wird neben der Bedienung der Navigationsvorrichtung auch für andere Zwecke, d.h. für die Bedienung anderer Vorrichtungen im Kraftfahrzeug verwendet, beispielsweise zum Bedienen eines Autotelefons, eines CD-Spielers und dergleichen. Dieser Drehschalter 10 ist, wie durch die Pfeile 30 angedeutet, mit und entgegen dem Uhrzeigersinn drehbar und außerdem durch eine axiale Bewegung in verschiedene Stellungen überführbar, wobei der Benutzer bei dem Übergang zwischen den einzelnen Axialstellungen eine haptische Rückmeldung erfährt. Der Drehschalter 10 weist eine erste Vertiefung 12 und eine zweite Vertiefung 14 auf, in die Rastelemente 16 einrasten können, so dass der Drehschalter 10 in zwei verschiedenen Axialstellungen fixiert werden kann. Eine Bewegung aus der in Figur 2 gezeigten Gleichgewichtsposition heraus erfolgt gegen die Kraft einer Feder 18.

Die Navigationsvorrichtung weist außerdem einen Monitor 20 auf, der in Figur 3 schematisch abgebildet ist und in einem Kraftfahrzeug so angebracht wird, dass er für den Benutzer gut sichtbar ist.

Die einzelnen Axialstellungen sind mit verschiedenen Bedienmodi korreliert, wobei die Bedienmodi und ihre Einstellung nachfolgend anhand der Figuren 2 und 3 beschrieben werden.

Eine erste Axialstellung ist durch Drücken des Drehschalters 10 bis zu einem merklichen Anschlag einzustellen, wobei die Rastelemente 16 in die erste Vertiefung 12 einrasten. Auf dem Monitor 20 wird in einem ersten Anzeigefeld 22 der Bedienmodus "Maßstabsänderung" angezeigt. Außerdem wird auf dem Monitor 20 in einem zweiten Anzeigefeld 24 ein Anzeigezeichen dargestellt, das einen aktuellen Maßstab einer abgebildeten Landkarte wiedergibt. Durch die Drehung des Drehschalters 10 kann nun der Maßstab der Landkarte verändert werden, wobei die Landkarte im jeweils aktuellen Maßstab gleichzeitig auf dem Monitor 20 angezeigt wird. Wird die Drehbewegung des Drehschalters 10 eingestellt, wird der aktuelle Abbildungsmaßstab gespeichert und bleibt bis zu einer nachfolgenden Maßstabsänderung erhalten.

Eine zweite Axialstellung ist ausgehend von der ersten Axialstellung durch leichten Druck auf den Drehschalter 10 gegen die Federkraft 18 zu erreichen. In dieser Stellung rastet der Drehschalter 10 nicht ein, wird jedoch diese Stellung über eine vorbestimmte Zeit eingenommen, lässt sich dadurch ein weiterer Bedienmodus wählen. Der dadurch gewählte Bedienmodus "Cursorbewegung-Pfeilrichtung" wird wiederum auf dem Monitor 20 in dem ersten Anzeigefeld 22 angezeigt. Auf dem Monitor 20 ist nun ebenfalls ein Cursor 26 zu erkennen, der beginnt, sich in einer Defaultrichtung zu bewegen. Die Geschwindigkeit der Cursorbewegung kann mit dem Abbildungsmaßstab der Landkarte in geeigneter Weise korreliert sein. Durch Drehung des Drehschalters 10 kann eine Änderung der Bewegungsrichtung des Cursors 26 herbeigeführt werden, wie durch die Pfeile 32 angedeutet wird. Hierbei kann der Cursor 26 als Pfeil auf dem Monitor 20 dargestellt sein, um seine Bewegungsrichtung zu verdeutlichen. Durch ein nochmaliges Drücken des Drehschalters 10 in die zweite axiale Stellung über eine vorbestimmte Zeit kann der Bedienmodus "Cursorbewegung-Pfeilrichtung" wieder verlassen werden.

Eine dritte Axialstellung ist ausgehend von der ersten Axialstellung durch leichtes Anziehen des Drehschalters 10 zu erreichen. Dabei rasten die Rastelemente 16 für den Benutzer spürbar in die zweite Vertiefung 14 des Drehschalters 10 ein. Eine vorher ausgewählte Route wird auf der Landkarte optisch hervorgehoben und außerdem wird der aktuelle Bedienmodus "Cursorbewegung-Route" in dem ersten Anzeigefeld 22 auf dem Monitor 20 angezeigt. Durch die Drehung des Drehschalters 10 lässt sich der Cursor 26 entlang der zuvor ausgewählten Route bewegen.

Ausgehend von der dritten Axialstellung gelangt man in die vierte Axialstellung durch Ziehen am Drehschalter 10.

In einer Ausgestaltung der Navigationsvorrichtung ist eine Abbildung aufrufbar, die ein Menü 28 mit mindestens einer Funktion aufweist.

Eine Weiterbildung der Navigationsvorrichtung sieht vor, daß durch die Funktion Informationen zu einem einer aktuellen Cursorposition entsprechenden Punkt oder zu einem Umkreis des entsprechenden Punktes auf der Landkarte abrufbar sind.

Es kann weiterhin vorgesehen sein, daß durch die Funktion der der aktuellen Cursorposition entsprechende Punkt auf der Landkarte als Ziel oder Zwischenziel setzbar ist.

In einer weiteren Ausgestaltung der Navigationsvorrichtung ist der Bedienmodus und/oder mindestens einer der weiteren Bedienmodi durch eine axiale Bewegung des Drehschalters 10 einstellbar.

Bei einer weiteren alternativen Ausführungsform kann die Cursorbewegungsrichtung bei Stillstand des Cursors 26 eingestellt werden. Nach erfolgter Einstellung kann dann durch Betätigung des Drehschalters 10 eine Bewegung des Cursors 26 in dieser Richtung ausgelöst werden, wobei diese Richtung durch Drehen des Drehschalters 10 modifiziert werden kann.

In einer weiteren alternativen Ausführungsform kann ein Umschalten der Betriebsmodi zum Beispiel durch einen gegen eine Federkraft 18 gelagerten Drehschalter 10 erfolgen, wobei die verschiedenen Betriebsmodi zyklisch durchlaufen werden und ein einmaliges kurzes Drücken des Drehschalters 10 mit einem ersten Betriebsmodus, ein zweimaliges kurz hintereinander erfolgtes Drücken mit einem zweiten Betriebsmodus usw. korreliert ist.

## Patentansprüche (Patentansprüche für folgende(n) Vertragsstaat(en): DE, ES, FR, GB)

1. Navigationsvorrichtung zum Einbau in ein Kraftfahrzeug, die einen Monitor (20) aufweist auf dem eine Abbildung mit einem Cursor darstellbar ist,
**dadurch gekennzeichnet,**
**dass** die Navigationsvorrichtung einen Drehschalter umfasst, wobei in einem ersten Bedienmodus des Drehschalters durch Drehung des Drehschalters (10) unabhängig von einer Bewegung des Cursors sowohl während der Bewegung des Cursors (26) als auch bei Stillstand des Cursors (26) eine Bewegungsrichtung des Cursors (26) auf der Abbildung wählbar ist.

2. Navigationsvorrichtung nach Anspruch 1,
**dadurch gekennzeichnet,**
**dass** durch Drehung des Drehschalters (10) in einem weiteren Bedienmodus der Maßstab der Abbildung wählbar ist.

3. Navigationsvorrichtung nach Anspruch 2,
**dadurch gekennzeichnet,**
**dass** der Mittelpunkt der Abbildung bei der Maßstabswahl erhalten bleibt.

4. Navigationsvorrichtung nach einem der vorhergehenden Ansprüche,
**dadurch gekennzeichnet,**
**dass** durch Drehung des Drehschalters (10) in einem weiteren Bedienmodus die Bewegung des oder eines Cursors (26) entlang oder entgegen einer ausgewählten Bewegungsrichtung ausführbar ist.

5. Navigationsvorrichtung nach einem der vorhergehenden Ansprüche,
**dadurch gekennzeichnet,**
**dass** durch eine axiale Krafteinwirkung auf den Drehschalter (10) die Bewegung des oder eines Cursors (26) entlang oder entgegen einer oder der ausgewählten Bewegungsrichtung ausführbar oder auslösbar ist.

6. Navigationsvorrichtung nach einem der vorhergehenden Ansprüche,
**dadurch gekennzeichnet,**
**dass** durch eine axiale Krafteinwirkung auf den Drehschalter (10) oder durch Drehung des Drehschalters (10) in einem weiteren Bedienmodus die Bewegung des oder eines Cursors (26) entlang einer vorbestimmten Route auf der Abbildung, insbesondere einer Landkarte, ausführbar ist.

7. Navigationsvorrichtung nach einem der vorhergehenden Ansprüche,
**dadurch gekennzeichnet,**
**dass** eine Abbildung aufrufbar ist, die ein Menü (28) mit mindestens einer Funktion aufweist.

8. Navigationsvorrichtung nach einem der vorhergehenden Ansprüche,
**dadurch gekennzeichnet,**
**dass** durch Drehung des Drehschalters (10) in einem weiteren Bedienmodus eine Funktion wählbar ist.

9. Navigationsvorrichtung nach einem der Ansprüche 7 oder 8 ,
**dadurch gekennzeichnet,**
**dass** die Abbildung eine Landkarte umfasst und dass durch die Funktion Informationen zu einem einer aktuellen Cursorposition entsprechenden Punkt oder zu einem Umkreis des entsprechenden Punktes auf der Landkarte abrufbar sind.

10. Navigationsvorrichtung nach einem der Ansprüche 7 bis 9,
**dadurch gekennzeichnet,**
**dass** die Abbildung eine Landkarte umfasst und dass durch die Funktion ein einer aktuellen Cursorposition entsprechender Punkt auf der Landkarte als Ziel oder Zwischenziel setzbar ist.

11. Navigationsvorrichtung nach Anspruch 7,
**dadurch gekennzeichnet,**
**dass** durch die Funktion der erste Bedienmodus und/oder mindestens einer der weiteren Bedienmodi einstellbar ist.

12. Navigationsvorrichtung nach einem der vorhergehenden Ansprüche,
**dadurch gekennzeichnet,**
**dass** der erste Bedienmodus und/oder mindestens eine der weiteren Bedienmodi durch eine axiale Bewegung des Drehschalters (10) einstellbar ist.

13. Navigationsvorrichtung nach einem der vorhergehenden Ansprüche,
**dadurch gekennzeichnet,**
**dass** der erste Bedienmodus und/oder mindestens einer der weiteren Bedienmodi durch die Betätigung mindestens eines weiteren Dreh- , Druck- und/oder Schiebeschalters einstellbar ist.

14. Navigationsvorrichtung nach einem der vorhergehenden Ansprüche,
**dadurch gekennzeichnet,**
**dass** der erste Bedienmodus und/oder mindestens einer der weiteren Bedienmodi durch mindestens eine kurze axiale Krafteinwirkung auf den Drehschalter (10) einstellbar ist.

## Patentansprüche (Patentansprüche für folgende(n) Vertragsstaat(en): IT)

1. Navigationsvorrichtung zum Einbau in ein Kraftfahrzeug, die einen Monitor (20) aufweist, auf dem eine Abbildung mit einem Cursor darstellbar ist,
**dadurch gekennzeichnet,**
**daß** die Navigationsvorrichtung einen Drehschalter umfaßt, wobei in einem ersten Bedienmodus des Drehschalters durch Drehung des Drehschalters (10) unabhängig von einer Bewegung des Cursors eine Bewegungsrichtung des Cursors (26) auf der Abbildung wählbar ist.

2. Navigationsvorrichtung nach Anspruch 1,
**dadurch gekennzeichnet,**
**dass** durch Drehung des Drehschalters (10) in einem weiteren Bedienmodus der Maßstab der Abbildung wählbar ist.

3. Navigationsvorrichtung nach Anspruch 2,
**dadurch gekennzeichnet,**
**dass** der Mittelpunkt der Abbildung bei der Maßstabswahl erhalten bleibt.

4. Navigationsvorrichtung nach einem der vorhergehenden Ansprüche,
**dadurch gekennzeichnet,**
**dass** durch Drehung des Drehschalters (10) in einem weiteren Bedienmodus die Bewegung des oder eines Cursors (26) entlang oder entgegen einer ausgewählten Bewegungsrichtung ausführbar ist.

5. Navigationsvorrichtung nach einem der vorhergehenden Ansprüche,
**dadurch gekennzeichnet,**
**dass** durch eine axiale Krafteinwirkung auf den Drehschalter (10) die Bewegung des oder eines Cursors (26) entlang oder entgegen einer oder der ausgewählten Bewegungsrichtung ausführbar oder auslösbar ist.

6. Navigationsvorrichtung nach Anspruch 4 oder 5,
**dadurch gekennzeichnet,**
**daß** die Bewegungsrichtung des Cursors (26) während der Bewegung des Cursors (26) oder bei Stillstand des Cursors (26) durch Drehung des Drehschalters (10) in dem ersten Bedienmodus änderbar ist.

7. Navigationsvorrichtung nach einem der vorhergehenden Ansprüche,
**dadurch gekennzeichnet,**
**dass** durch eine axiale Krafteinwirkung auf den Drehschalter (10) oder durch Drehung des Drehschalters (10) in einem weiteren Bedienmodus die Bewegung des oder eines Cursors (26) entlang einer vorbestimmten Route auf der Abbildung, insbesondere einer Landkarte, ausführbar ist.

8. Navigationsvorrichtung nach einem der vorhergehenden Ansprüche,
**dadurch gekennzeichnet,**
**dass** eine Abbildung aufrufbar ist, die ein Menü (28) mit mindestens einer Funktion aufweist.

9. Navigationsvorrichtung nach einem der vorhergehenden Ansprüche,
**dadurch gekennzeichnet,**
**dass** durch Drehung des Drehschalters (10) in einem weiteren Bedienmodus eine Funktion wählbar ist.

10. Navigationsvorrichtung nach einem der Ansprüche 8 oder 9,
**dadurch gekennzeichnet,**
**daß** die Abbildung eine Landkarte umfaßt und daß durch die Funktion Informationen zu einem einer aktuellen Cursorposition entsprechenden Punkt oder zu einem Umkreis des entsprechenden Punktes auf der Landkarte abrufbar sind.

11. Navigationsvorrichtung nach einem der Ansprüche 8 bis 10,
**dadurch gekennzeichnet,**
**daß** die Abbildung eine Landkarte umfaßt und daß durch die Funktion ein einer aktuellen Cursorposition entsprechender Punkt auf der Landkarte als Ziel oder Zwischenziel setzbar ist.

12. Navigationsvorrichtung nach Anspruch 8,
**dadurch gekennzeichnet,**
**daß** durch die Funktion der erste Bedienmodus und/oder mindestens einer der weiteren Bedienmodi einstellbar ist.

13. Navigationsvorrichtung nach einem der vorhergehenden Ansprüche,
**dadurch gekennzeichnet,**
**daß** der erste Bedienmodus und/oder mindestens einer der weiteren Bedienmodi durch eine axiale Bewegung des Drehschalters (10) einstellbar ist.

14. Navigationsvorrichtung nach einem der vorhergehenden Ansprüche,
**dadurch gekennzeichnet,**
**daß** der erste Bedienmodus und/oder mindestens einer der weiteren Bedienmodi durch die Betätigung mindestens eines weiteren Dreh-, Druck- und/oder Schiebeschalters einstellbar ist.

15. Navigationsvorrichtung nach einem der vorhergehenden Ansprüche,
**dadurch gekennzeichnet,**
**daß** der erste Bedienmodus und/oder mindestens einer der weiteren Bedienmodi durch mindestens eine kurze axiale Krafteinwirkung auf den Drehschalter (10) einstellbar ist.

## Claims (Claims for the following Contracting State(s): DE, ES, FR, GB)

1. Navigation device for installation in a motor vehicle, which exhibits a monitor (20) on which a picture with a cursor can be shown,
**characterised by** the fact
that the navigation device contains a rotary switch, where, in a first operating mode of the rotary switch, by turning the rotary switch (10) independently of a movement of the cursor, both during the movement of the cursor (26) and also with the cursor (26) stationary, a direction of movement of the cursor (26) can be selected.

2. Navigation device according to claim 1,
**characterised by** the fact
that by turning the rotary switch (10) in a further operating mode the scale of the picture can be selected.

3. Navigation device according to claim 2,
**characterised by** the fact
that the mid-point of the picture remains maintained during the selection of the scale.

4. Navigation device according to one of the foregoing claims,
**characterised by** the fact
that by turning the rotary switch (10) in a further operating mode the movement of the or a cursor (26) can be effected along or towards¹ a selected direction of movement.
¹ "Along or towards" seems rather odd when speaking of direction. The literal meaning of entgegen is opposite to, but when speaking of direction it usually means towards

5. Navigation device according to one of the foregoing claims,
**characterised by** the fact
that through an axial force on the rotary switch (10) the movement of the or a cursor (26) along or towards¹ the selected direction of movement can be carried out or disengaged².
¹ "Along or towards" seems rather odd when speaking of direction. The literal meaning of entgegen is opposite to, but when speaking of direction it usually means towards
²The normal meaning of the verb from which this word comes is to release or trigger, but since it says that the movement can be carried out this is already implied and the text only makes sense if the opposite is meant here, so I have used the much less common meaning

6. Navigation device according to one of the foregoing claims,
**characterised by** the fact
that through an axial force on the rotary switch (10) or through turning of the rotary switch (10) in a further operating mode the movement of the or a cursor (26) along a predetermined route on the picture, in particular a map, can be carried out.

7. Navigation device according to one of the foregoing claims,
**characterised by** the fact
that a picture can be called up which exhibits an menu (28) with at least one function.

8. Navigation device according to one of the foregoing claims,
**characterised by the fact**
that by turning the rotary switch (10) in a further operating mode a function can be selected.

9. Navigation device according to one of the claims 7 or 8,
**characterised by** the fact
that the picture contains a map and that through the function information on a point corresponding to a current cursor position or on an area surrounding the corresponding point can be called up on the map.

10. Navigation device according to one of the claims 7 to 9,
**characterised by** the fact
that the picture contains a map and that through the function a point corresponding to a current cursor position can be set as a target or intermediate target

11. Navigation device according to claim 7,
**characterised by** the fact
that through the function the first operating mode and/or at least one of the further operating modes can be put into operation.

12. Navigation device according to one of the foregoing claims,
**characterised by** the fact
that the first operating mode and/or at least one of the further operating modes can be put into operation by an axial movement of the rotary switch (10).

13. Navigation device according to one of the foregoing claims,
**characterised by** the fact
that the first operating mode and/or at least one of the further operating modes can be put into operation through the activation of at least one further rotary switch, pressbutton or sliding switch.

14. Navigation device according to one of the foregoing claims,
**characterised by** the fact
that the first operating mode and/or at least one of the further operating modes can be put into operation through at least one short axial force action on the rotary switch (10).

## Claims (Claims for the following Contracting State(s): IT)

1. Navigation device for installation in a motor vehicle, which exhibits a monitor (20), on which an illustration with a cursor can be reepresented,
**characterised by** the fact
that the navigation device contains a rotary switch, where in a first mode of operation of the rotary switch through rotation of the rotary switch (10) independently of a movement of the cursor a direction of movement of the cursor (26) is selectable on the illustration.

2. Navigation device as per claim 1,
**characterised by** the fact
that through rotating the rotary switch (10) in a further operating mode the scale of the illustration is selectable.

3. Navigation device as per claim 2,
**characterised by** the fact
that the centre of the illustration remains maintained with selection of scale.

4. Navigation device as per one of the foregoing claims,
**characterised by** the fact
that through rotation of the rotary switch (10) in a further mode of operation the movement of the or a cursor (26) along or against a selected direction of movement is selectable.

5. Navigation device as per one of the foregoing claims,
**characterised by** the fact
that through an axial power effect on the rotary switch (10) the movement of the or a cursor (26) along or against a or the selected direction of movement can be carried out or disengaged.

6. Navigation device as per claim 4 or 5,
**characterised by** the fact
that the direction of movement of the cursor (26) can be changed in the first mode of operation through rotation of the rotary switch (10) during the movement of the cursor (26) or with the cursor (26) being stationary.

7. Navigation device as per one of the foregoing claims,
**characterised by** the fact
that through an axial power effect on the rotary switch (10) or through a rotation of the rotary switch (10) in a further mode of operation the movement of the or a cursor (26) along a predetermined route on the illustration, in particular a map, can be carried out.

8. Navigation device as per one of the foregoing claims,
**characterised by** the fact
that an illustration can be called up, which exhibits a menu (28) with at least one function.

9. Navigation device as per one of the foregoing claims,
**characterised by** the fact
that through rotation of the rotary switch (10) in a further mode of operation a function is selectable.

10. Navigation device as per one of the claims 8 or 9,
**characterised by the fact**
that the illustration comprises a map and that through the function information on a point corresponding to a current cursor position or to surroundings of the corresponding point can be called up on the map.

11. Navigation device as per one of the claims 8 to 10,
**characterised by** the fact
that the illustration comprises a map and that through the function a point on the map corresponding to a current cursor position can be set as target or intermediate target.

12. Navigation device as per claim 8,
**characterised by** the fact
that through the function the first mode of operation and/or at least one of the further modes of operation is adjustable.

13. Navigation device as per one of the foregoing claims,
**characterised by** the fact
that the first mode of operation and/or at least one of the further
modes of operation can be adjusted through an axial movement of the rotary switch (10).

14. Navigation device as per one of the foregoing claims,
**characterised by** the fact
that the first mode of operation and/or at least one of the further modes of operation can be adjusted through the actuation of at least one further rotary, pressure and/or sliding switch.

15. Navigation device as per one of the foregoing claims,
**characterised by** the fact
that the first mode of operation and/or at least one of the further modes of operation can be adjusted through a short axial power effect on the rotary switch (10).

## Revendications (Revendications pour l'(les) Etat(s) contractant(s) suivant(s): DE, ES, FR, GB)

1. Dispositif de navigation devant être monté dans un véhicule automobile, présentant un moniteur (20) sur lequel une image est représentable avec un curseur,
**caractérisé en ce que**
le dispositif de navigation comprend un commutateur rotatif, un sens de déplacement du curseur (26) sur l'image étant sélectionnable dans un premier mode de fonctionnement du commutateur rotatif, par rotation du commutateur rotatif (10), indépendamment d'un déplacement du curseur, aussi bien pendant le déplacement du curseur (26) que lors de l'arrêt du curseur.

2. Dispositif de navigation selon la revendication 1,
**caractérisé en ce que**
l'échelle de l'image est sélectionnable dans un autre mode de fonctionnement par rotation du commutateur (10).

3. Dispositif de navigation selon la revendication 2,
**caractérisé en ce que**
le point central de l'image se trouve maintenu lors du choix de l'échelle.

4. Dispositif de navigation selon l'une des revendications précédentes,
**caractérisé en ce que**,
lors d'une rotation du commutateur rotatif (10) vers un autre mode de fonctionnement, le déplacement du ou d'un curseur (26) est réalisable le long ou en sens inverse d'un sens de déplacement sélectionné.

5. Dispositif de navigation selon l'une des revendications précédentes,
**caractérisé en ce que**,
suite à une application de force axiale sur le commutateur rotatif (10), le déplacement du ou d'un curseur (26) peut être réalisé ou déclenché le long ou en sens inverse d'un ou du sens de déplacement sélectionné.

6. Dispositif de navigation selon l'une des revendications précédentes,
**caractérisé en ce que**,
suite à une application de force axiale sur le commutateur rotatif (10) ou suite à une rotation du commutateur rotatif (10) dans un autre mode de fonctionnement, le déplacement du ou d'un curseur (26) le long d'un itinéraire prédéfini est réalisable sur l'image, en particulier sur une carte routière.

7. Dispositif de navigation selon l'une des revendications précédentes,
**caractérisé en ce qu'**
une image présentant un menu (28) avec au moins une fonction, peut être appelée.

8. Dispositif de navigation selon l'une des revendications précédentes,
**caractérisé en ce qu'**
une fonction est sélectionnable par rotation du commutateur rotatif (10) dans un autre mode de fonctionnement.

9. Dispositif de navigation selon l'une des revendications 7 ou 8,
**caractérisé en ce que**
l'image comprend une carte routière et, **en ce que** grâce à la fonction, des informations sont consultables sur la carte routière à un point correspondant à une position actuelle du curseur ou sur une circonférence du point correspondant.

10. Dispositif de navigation selon l'une des revendications 7 à 9,
**caractérisé en ce que**
l'image comprend une carte routière et **en ce que**, grâce à la fonction, un point correspondant à la position actuelle du curseur est positionnable sur la carte routière en tant qu'objectif ou qu'objectif intermédiaire.

11. Dispositif de navigation selon la revendication 7,
**caractérisé en ce que**
le premier mode de fonctionnement et / ou au moins l'un des autres modes de fonctionnement est réglable grâce à la fonction.

12. Dispositif de navigation selon l'une des revendications précédentes,
**caractérisé en ce que**
le premier mode de fonctionnement et / ou au moins l'un des autres modes de fonctionnement est réglable par un déplacement axial du commutateur rotatif (10).

13. Dispositif de navigation selon l'une des revendications précédentes,
**caractérisé en ce que**
le premier mode de fonctionnement et / ou au moins l'un des autres modes de fonctionnement est réglable par l'actionnement d'au moins un autre commutateur rotatif, interrupteur à poussoir, et / ou commutateur à coulisse.

14. Dispositif de navigation selon l'une des revendications précédentes,
**caractérisé en ce que**
le premier mode de fonctionnement et / ou au moins l'un des autres modes de fonctionnement est réglable par au moins une brève application de force axiale sur le commutateur rotatif (10).

## Revendications (Revendications pour l'(les) Etat(s) contractant(s) suivant(s): IT)

1. Dispositif de navigation devant être monté dans un véhicule automobile, présentant un moniteur (20) sur lequel une image est représentable avec un curseur,
**caractérisé en ce que**
le dispositif de navigation comprend un commutateur rotatif, un sens de déplacement du curseur (26) sur l'image étant sélectionnable dans un premier mode de fonctionnement du commutateur rotatif, par rotation du commutateur rotatif (10), indépendamment d'un déplacement du curseur.

2. Dispositif de navigation selon la revendication 1,
**caractérisé en ce que**
l'échelle de l'image est sélectionnable dans un autre mode de fonctionnement par rotation du commutateur (10).

3. Dispositif de navigation selon la revendication 2,
**caractérisé en ce que**
le point central de l'image se trouve maintenu lors du choix de l'échelle.

4. Dispositif de navigation selon l'une des revendications précédentes,
**caractérisé en ce que**,
lors d'une rotation du commutateur rotatif (10) vers un autre mode de fonctionnement, le déplacement du ou d'un curseur (26) est réalisable le long ou en sens inverse d'un sens de déplacement sélectionné.

5. Dispositif de navigation selon l'une des revendications précédentes,
**caractérisé en ce que**,
suite à une application de force axiale sur le commutateur rotatif (10), le déplacement du ou d'un curseur (26) peut être réalisé ou déclenché le long ou en sens inverse d'un ou du sens de déplacement sélectionné.

6. Dispositif de navigation selon la revendication 4 ou 5, **caractérisé en ce que** le sens de déplacement du curseur (26) est modifiable pendant le déplacement du curseur (26) ou lors de l'arrêt du curseur (26) par rotation du commutateur rotatif (10) dans un premier mode de fonctionnement.

7. Dispositif de navigation selon l'une des revendications précédentes,
**caractérisé en ce que**,
suite à une application de force axiale sur le commutateur rotatif (10) ou suite à une rotation du commutateur rotatif (10) dans un autre mode de fonctionnement, le déplacement du ou d'un curseur (26) le long d'un itinéraire prédéfini est réalisable sur l'image, en particulier sur une carte routière.

8. Dispositif de navigation selon l'une des revendications précédentes,
**caractérisé en ce qu'**
une image présentant un menu (28) avec au moins une fonction, peut être appelée.

9. Dispositif de navigation selon l'une des revendications précédentes,
**caractérisé en ce qu'**
une fonction est sélectionnable par rotation du commutateur rotatif (10) dans un autre mode de fonctionnement.

10. Dispositif de navigation selon l'une des revendications 7 ou 8,
**caractérisé en ce que**
l'image comprend une carte routière et, **en ce que** grâce à la fonction, des informations sont consultables sur la carte routière à un point correspondant à une position actuelle du curseur ou sur une circonférence du point correspondant.

11. Dispositif de navigation selon l'une des revendications 7 à 9,
**caractérisé en ce que**
l'image comprend une carte routière et **en ce que**, grâce à la fonction, un point correspondant à la position actuelle du curseur est positionnable sur la carte routière en tant qu'objectif ou qu'objectif intermédiaire.

12. Dispositif de navigation selon la revendication 7,
**caractérisé en ce que**
le premier mode de fonctionnement et / ou au moins l'un des autres modes de fonctionnement est réglable grâce à la fonction.

13. Dispositif de navigation selon l'une des revendications précédentes,
**caractérisé en ce que**
le premier mode de fonctionnement et / ou au moins l'un des autres modes de fonctionnement est réglable par un déplacement axial du commutateur rotatif (10).

14. Dispositif de navigation selon l'une des revendications précédentes,
**caractérisé en ce que**
le premier mode de fonctionnement et / ou au moins l'un des autres modes de fonctionnement est réglable par l'actionnement d'au moins un autre commutateur rotatif, interrupteur à poussoir, et / ou commutateur à coulisse.

15. Dispositif de navigation selon l'une des revendications précédentes,
**caractérisé en ce que**
le premier mode de fonctionnement et / ou au moins l'un des autres modes de fonctionnement est réglable par au moins une brève application de force axiale sur le commutateur rotatif (10).
